# EUROPEAN PATENT APPLICATION

(11) **EP 4 726 910 A1**
(43) Date of publication of application: **15.04.2026**
(21) Application number: 24819335.1
(22) Date of filing: 05.06.2024
(51) Int. Cl.: H01M 50/691, H01M 50/15, H01M 50/55, H01M 50/103, H01M 50/262, H01M 50/264, H01M 50/636

(54) **LITHIUM ION SECONDARY BATTERY AND LITHIUM ION BATTERY PACK**

(30) Priority: 07.06.2023 JP 2023093831
(71) Applicant: Vehicle Energy Japan Inc., Hitachinaka-shi, Ibaraki 312-8505 (JP)
(72) Inventor: TAKAHASHI Hirofumi, Hitachinaka-shi, Ibaraki 312-8505 (JP); TANAKA Nobuyoshi, Hitachinaka-shi, Ibaraki 312-8505 (JP); MORISHITA Takuma, Hitachinaka-shi, Ibaraki 312-8505 (JP); TSUNAKI Takuro, Hitachinaka-shi, Ibaraki 312-8505 (JP); SUZUKI Shuichi, Hitachinaka-shi, Ibaraki 312-8505 (JP)
(74) Representative: Strehl & Partner mbB
(86) International application number: PCT/JP2024/020440
(87) International publication number: WO 2024/253107

(57) **Abstract**

Provided are a novel lithium ion secondary battery enabling replenishment or replacement of an electrolyte and
a lithium ion battery pack.

Two openable and closable electrolyte circulation mechanisms (30U and 30B) for replenishing or replacing an electrolyte by circulating the electrolyte from the inside of a battery container (1 or 6) to the outside of the battery container or from the outside of the battery container to the inside of the battery container are provided. The circulation mechanism includes a fixing portion (32) that is fixed by welding to an outer surface or an inner surface of the battery container, a shaft portion (35) that is integrally formed with the fixing portion, has a flow path (36) that is inserted through the inside of the fixing portion and fluidly connected to an internal space of the battery container, and protrudes outward from the outside surface of the battery container, and a sealing body (39) detachably attached to the distal end side of the shaft portion so as to be capable of opening and closing an opening portion (35S) of the flow path.

## Description

### Technical Field

The present invention relates to a lithium ion secondary battery and a lithium ion battery pack, and particularly to a lithium ion secondary battery enabling the replenishment or replacement of an electrolyte and a lithium ion battery pack in which the same is used.

### Background Art

Conventionally, there have been developed secondary batteries having a large capacity as a power source for, for example, a hybrid vehicle, an electric vehicle, or the like, or a power storage device for household electricity. Among such secondary batteries, particularly lithium ion secondary batteries have attracted attention as secondary batteries with a high energy density. Lithium ion secondary batteries (hereinafter also referred to as battery cells) constituting a lithium ion battery pack are manufactured by the following method as in, for example, Patent Literature 1 (WO 2013/124982).

First, a power storage element having a positive electrode having a positive electrode active material, a negative electrode having a negative electrode active material, and a separator for insulating these electrodes is manufactured. Next, the power storage element is electrically connected to a positive electrode external terminal and a negative electrode external terminal provided on a battery lid, these are accommodated in a battery can, and an opening portion of the battery can is welded and sealed with a battery lid. Here, a battery container is formed of the battery can and the battery lid.

In addition, an electrolyte is injected from a liquid injection hole provided in the battery lid, and when the liquid injection is completed, a liquid injection plug is attached so as to close the liquid injection hole, and the battery lid and the liquid injection plug are integrally sealed by being coupled by laser welding. Leakage of the electrolyte to the outside during use is prevented in the above-described manner.

### Citation List

### Patent Literature

Patent Literature 1: WO 2013/124982

### Summary of Invention

### Technical Problem

Incidentally, for example, when the charge and discharge of a lithium ion secondary battery are repeated over a long period of time, metallic lithium is precipitated on the surface of the negative electrode, and the number of lithium ions that can move between the negative electrode active material and the positive electrode active material tends to gradually decrease. In addition, when the number of lithium ions as charge carriers decreases, there is a problem in that the battery capacity of the lithium ion secondary battery decreases. Therefore, there is a need for a configuration in which the electrolyte in use can be replenished or replaced with a new electrolyte in order to recover the battery capacity. In addition, in the case of recycling lithium ion secondary batteries, it is necessary to replace the electrolyte with a new electrolyte.

However, as described in Patent Literature 1, in a conventional lithium ion secondary battery, the liquid injection plug is laser-welded to the battery lid, and the replenishment or replacement of an electrolyte is thus not planned. From such a background, there is a need for a new lithium ion secondary battery enabling the replenishment or replacement of an electrolyte.

An object of the present invention is to provide a novel lithium ion secondary battery and a lithium ion battery pack that facilitate the discharge of an electrolyte or the injection of an electrolyte or a substance of a predetermined component into the electrolyte.

### Solution to Problem

A first feature of the present invention is a lithium ion secondary battery including a battery container accommodating an electrode body and an electrolyte, wherein the battery container includes a circulation mechanism that discharges the electrolyte or injects an electrolyte or injects a substance of a predetermined component into the electrolyte, the circulation mechanism includes a fixing portion provided on the battery container, a shaft portion being continuous to the fixing portion, having a flow path that is inserted through an inside of the fixing portion and is fluidly connected to an internal space of the battery container to discharge the electrolyte or inject the electrolyte or a substance of a predetermined component into the electrolyte, and being disposed on an outer surface of the battery container, and a sealing body attached so as to be capable of blocking or opening an opening portion of the flow path on a distal end side of the shaft portion disposed in the battery container.

A second feature of the present invention is a lithium ion battery pack formed by stacking a plurality of lithium ion secondary batteries each including a battery container accommodating an electrode body and an electrolyte, wherein a first circulation mechanism for injecting the electrolyte or a substance of a predetermined component into the electrolyte from an outside of the battery container toward an internal space of the battery container is disposed on a first surface of the battery container, a second circulation mechanism for discharging the electrolyte or a substance of a predetermined component injected into the electrolyte from an internal space of the battery container toward the outside of the battery container is disposed on a second surface different from the first surface of the battery container along a stacking direction of the battery container, end plates installed at both ends of the stacked lithium ion secondary batteries in the stacking direction and a side plate connecting and fixing the end plates are provided, the side plate is formed to face the second surface, and a space portion is formed in the side plate to prevent the second circulation mechanism and the side plate from mechanically interfering with each other.

### Advantageous Effects of Invention

According to the present invention, it is possible to provide a novel lithium ion secondary battery and a lithium ion battery pack that facilitate the discharge of an electrolyte or the injection of an electrolyte or a substance of a predetermined component into the electrolyte.

### Brief Description of Drawings

[Fig. 1]

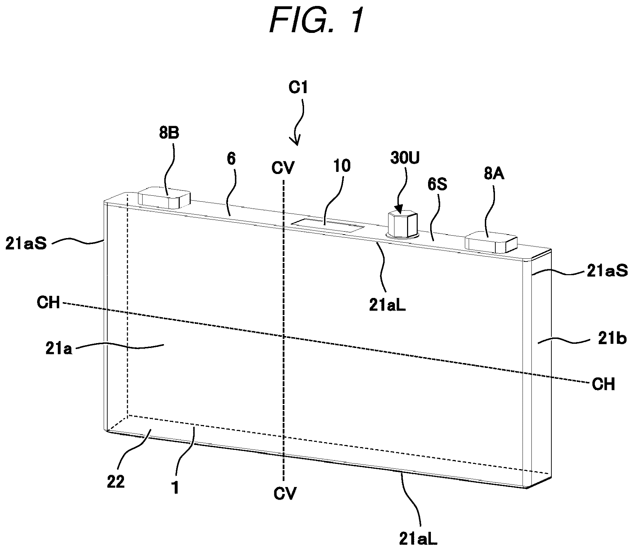

   Fig. 1 is an appearance perspective view of a lithium ion secondary battery that serves as a first embodiment of the present invention.
[Fig. 2]

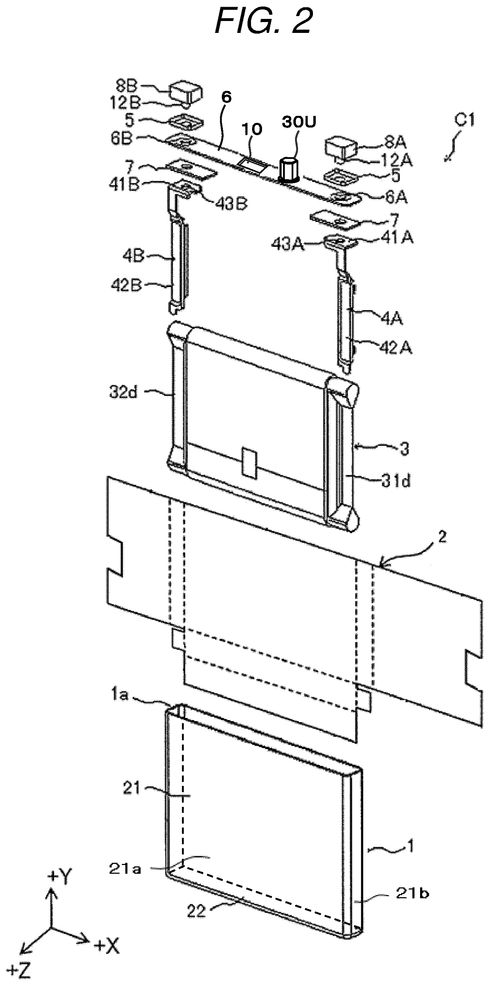

   Fig. 2 is an exploded perspective view showing the configuration of the lithium ion secondary battery shown in Fig. 1.
[Fig. 3]

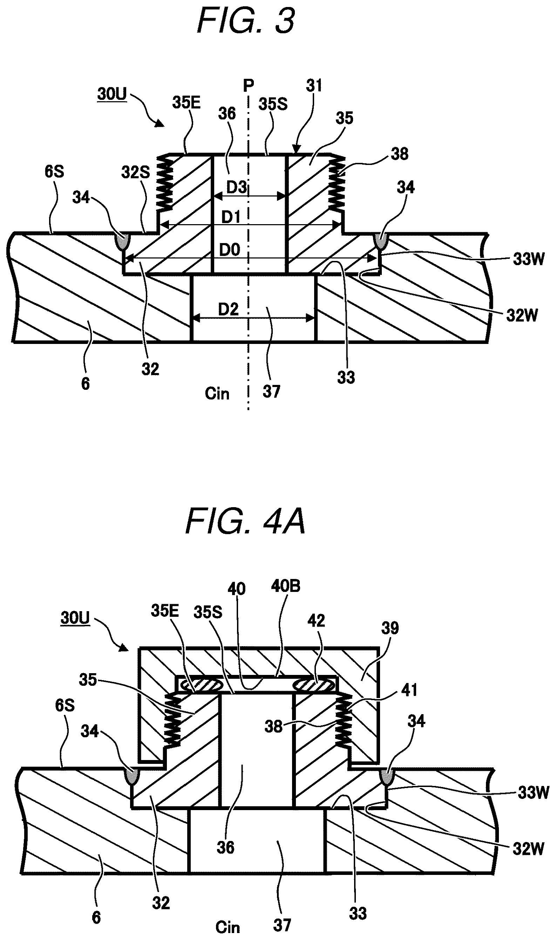

   Fig. 3 is a cross-sectional view showing the configuration of a circulation mechanism shown in Fig. 1 when an opening/closing cap is removed therefrom.
[Fig. 4A]
   Fig. 4A is a cross-sectional view showing the configuration of the circulation mechanism shown in Fig. 3 when the opening/closing cap is attached thereto.
[Fig. 4B]

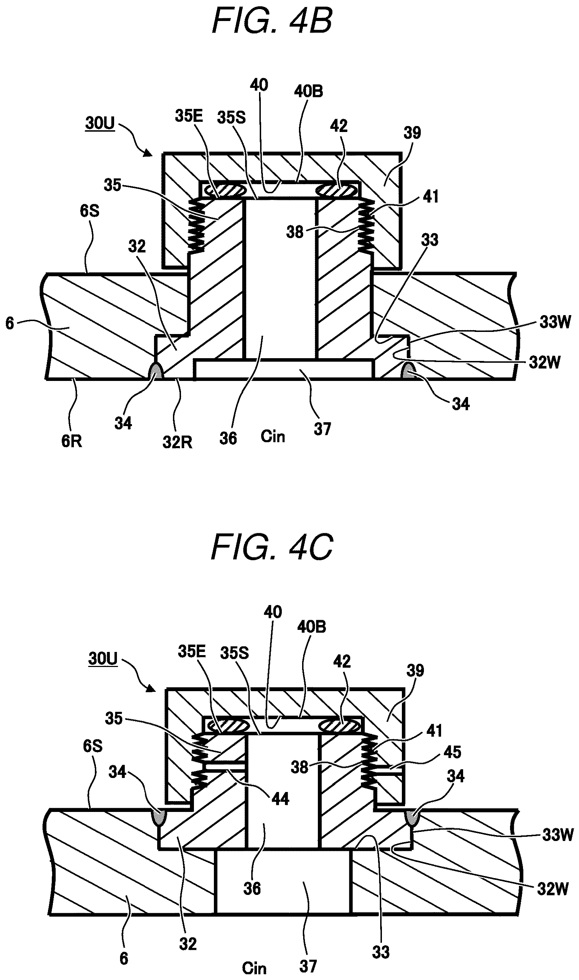

   Fig. 4B is a cross-sectional view showing a first modified example of the circulation mechanism shown in Fig. 4A and showing the configuration of the circulation mechanism when the opening/closing cap is attached thereto.
[Fig. 4C]
   Fig. 4C is a cross-sectional view showing a second modified example of the circulation mechanism shown in Fig. 4A and showing the configuration of the circulation mechanism when the opening/closing cap is attached thereto.
[Fig. 5]

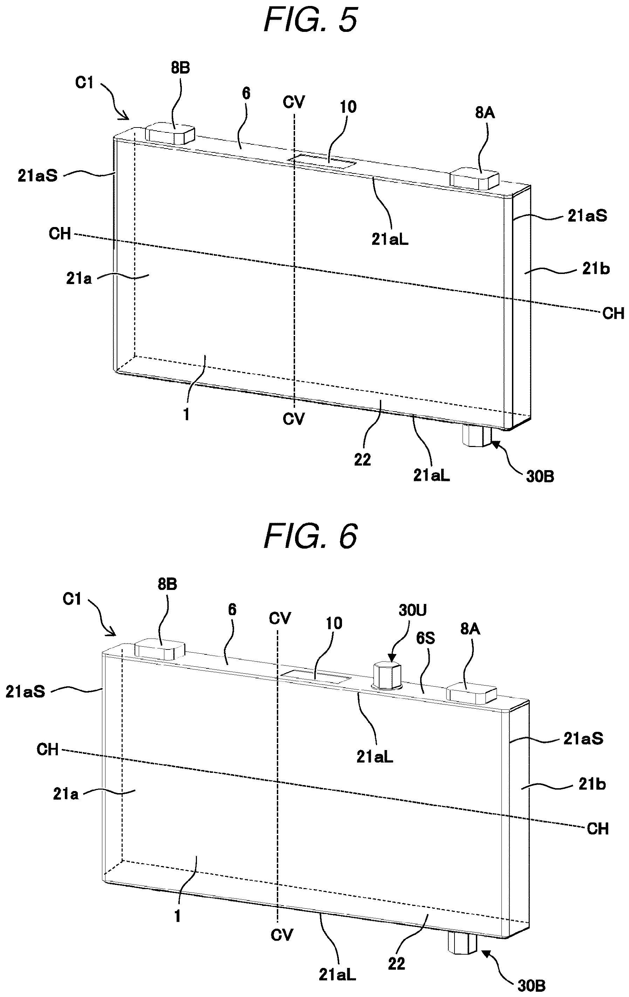

   Fig. 5 is an appearance perspective view of a lithium ion secondary battery that serves as a modified example of the first embodiment of the present invention.
[Fig. 6]
   Fig. 6 is an appearance perspective view of a lithium ion secondary battery that serves as a second embodiment of the present invention.
[Fig. 7A]

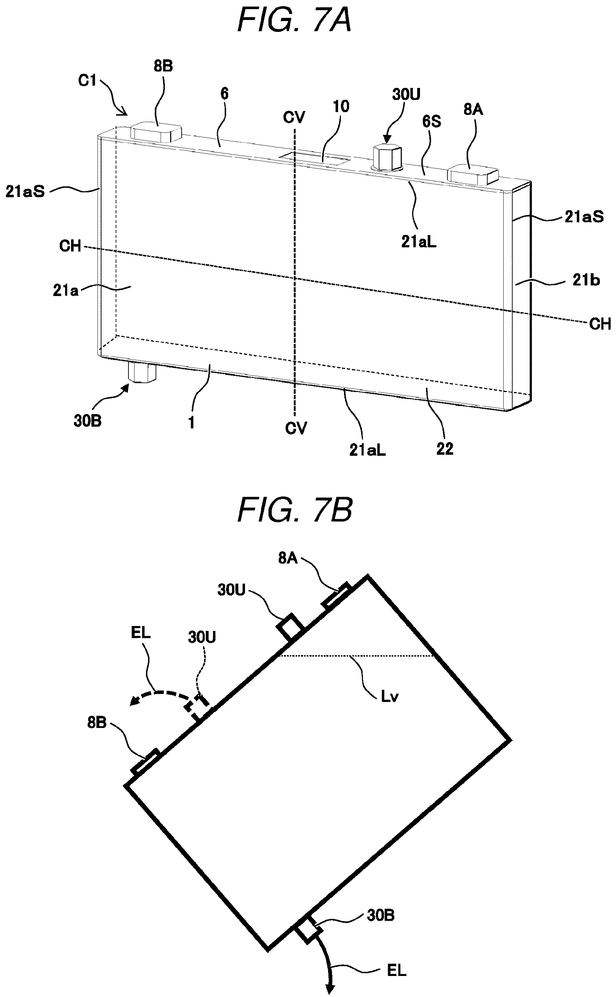

   Fig. 7A is an appearance perspective view of a lithium ion secondary battery that serves as a first modified example of the second embodiment of the present invention.
[Fig. 7B]
   Fig. 7B is an explanatory view for describing an effect in the first modified example of the second embodiment of Fig. 7A.
[Fig. 8]

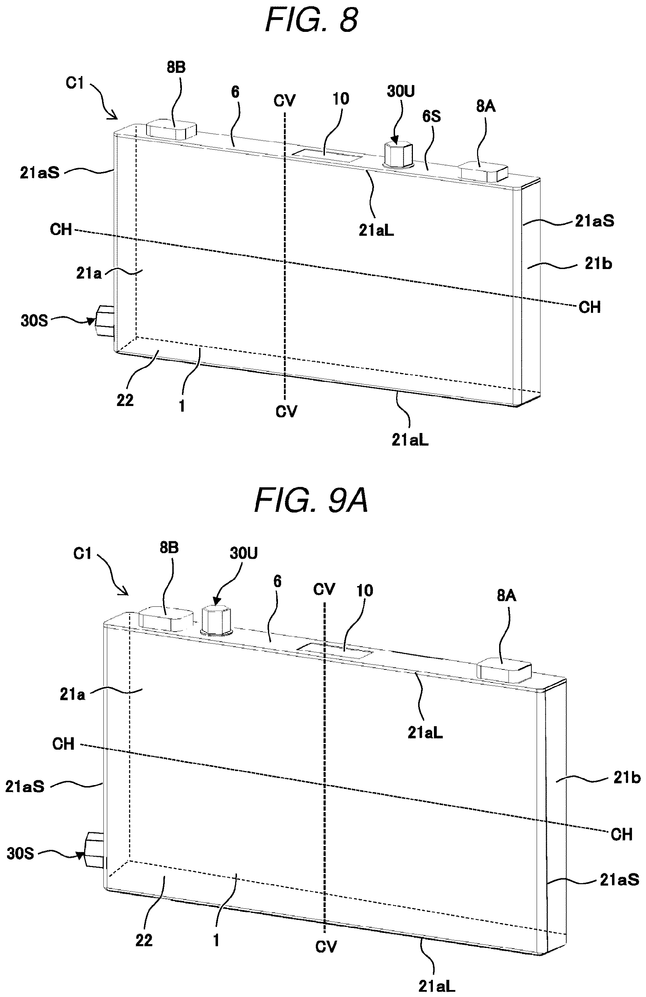

   Fig. 8 is an appearance perspective view of a lithium ion secondary battery that serves as a second modified example of the second embodiment of the present invention.
[Fig. 9A]
   Fig. 9A is an appearance perspective view of a lithium ion secondary battery that serves as a third embodiment of the present invention.
[Fig. 9B]

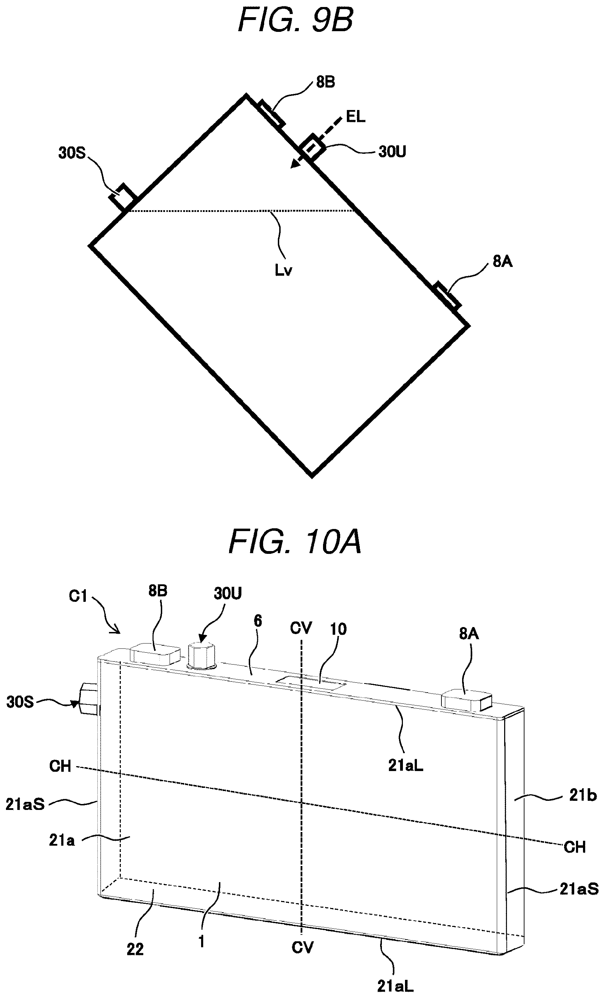

   Fig. 9B is an explanatory view for describing an effect in the third embodiment of Fig. 9A.
[Fig. 10A]
   Fig. 10A is an appearance perspective view of a lithium ion secondary battery that serves a first modified example of the third embodiment of the present invention.
[Fig. 10B]

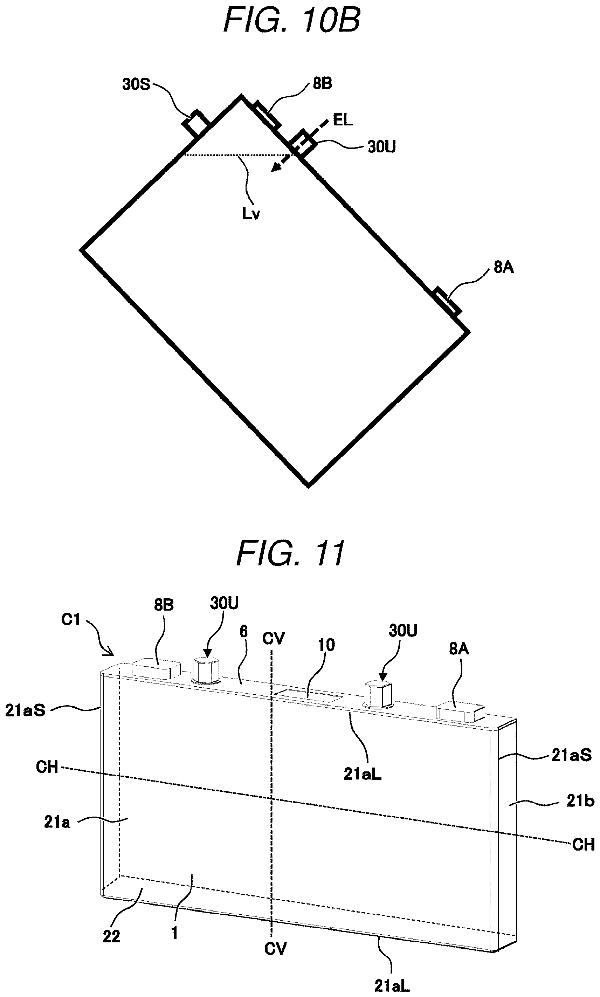

   Fig. 10B is an explanatory view for describing an effect in the first modified example of the third embodiment of Fig. 10A.
[Fig. 11]
   Fig. 11 is an appearance perspective view of a lithium ion secondary battery that serves as a second modified example of the third embodiment of the present invention.
[Fig. 12]

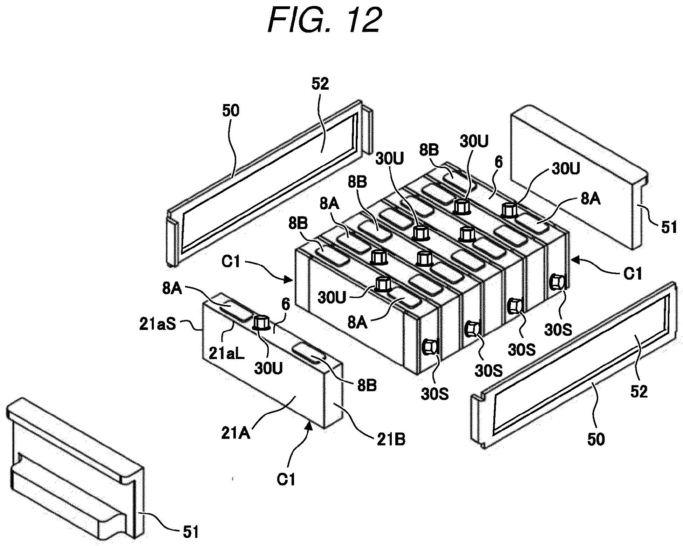

   Fig. 12 is an appearance perspective view of a lithium ion battery pack that serves as a fourth embodiment of the present invention.

### Description of Embodiments

Embodiments of the present invention will be described below in detail with reference to the drawings, but the present invention is not limited to the following embodiments, and various modified examples and application examples within the technical concept of the present invention are also included in the scope of the present invention.

### Example 1

Embodiments of the present invention will be described using drawings, and in the following embodiments, a case of a square lithium ion secondary battery that is used in hybrid vehicles or electric vehicles will be described as an example of a lithium ion secondary battery. Fig. 1 shows an appearance of a battery cell, which is a lithium ion secondary battery that serves as a first embodiment of the present invention, seen from diagonally above. In addition, a plurality of the battery cells are stacked to configure a lithium ion battery pack.

As shown in Fig. 1, a battery cell C1 that is the lithium ion secondary battery of the first embodiment, includes a battery can 1 and a lid member (hereinafter referred to as a battery lid) 6. Hereinafter, these are collectively defined as "battery container". In addition, in the internal space of the battery can 1, a wound electrode body 3 (refer to Fig. 2) as "power generation element" is accommodated, and an opening portion 1a (refer to Fig. 2) of the battery can 1 is sealed with the battery lid 6.

As can be seen from Fig. 1, the battery can 1 of the battery cell C1 is configured as a square battery cell formed in a substantially rectangular shape having a rectangular can bottom 22, square tubular side wall parts 21a and 21b rising from four sides of the can bottom 22 in the cell height direction, and an opening portion 1a (refer to Fig. 2) opened in the cell height direction at the upper ends of the side wall parts 21a and 21b. The battery can 1 has a shape of a bottomed box that is open on one side as described above. It should be noted that a bottomed cylindrical container also belongs to a conceptual category of a box form. As described above, the battery can 1 is formed in a square tubular or cylindrical box form.

The side wall part 21a as a stacked surface of the square battery cell C1 is formed in a substantially rectangular shape (rectangular in the present embodiment) composed of four sides, and has left and right short sides 21aS orthogonal to the longitudinal direction and facing each other, and upper and lower long sides 21aL orthogonal to the lateral direction and facing each other.

The battery lid 6 is joined to the battery can 1 by laser welding, and a battery container airtightly sealed with these battery can 1 and battery lid 6 is configured. In the battery lid 6, a positive electrode external terminal 8A and a negative electrode external terminal 8B are provided. In the battery cell C1, the wound electrode body 3 is charged via the positive electrode external terminal 8A and the negative electrode external terminal 8B, and the battery cell C1 supplies power to an external load.

The battery lid 6 is integrally provided with a gas discharge mechanism 10, and when the gas pressure in the battery container increases up to a predetermined pressure for some reason, a gas discharge valve of the gas discharge mechanism 10 is opened, and a gas is discharged from the inside. As a result, the gas pressure in the battery container is reduced, and the safety of the battery cell C1 is ensured.

Also, the battery lid 6 is provided with a circulation mechanism 30U having a liquid injection/liquid discharge function for injecting and discharging an electrolyte, which is a feature of the first embodiment, and a passage is closed by an opening/closing cap (refer to Fig. 4A) in the circulation mechanism 30U after the liquid injection or liquid discharge of the electrolyte. The circulation mechanism 30U will be described later.

Conventionally, the battery lid 6 is provided with a liquid injection port for loading an electrolyte, and after the injection of the electrolyte, a liquid injection plug is integrally coupled to the battery lid 6 by laser welding. Therefore, the discharge of an electrolyte or the injection of an electrolyte or a substance of a predetermined component into the electrolyte is not assumed.

In the following description, the electrolyte and the substance of the predetermined component may be collectively referred to as "electrolyte". Also, the discharge of the electrolyte or the injecting of the electrolyte or the substance of the predetermined component into the electrolyte may be referred to as "replenishment" or "replacement".

A predetermined component of the electrolyte may be a part of the components configuring the electrolyte. Alternatively, the predetermined component may be a component separate from the components of the electrolyte. For example, lithium can be injected in a solution form. In addition, a liquid form is preferable in terms of injection or discharge, but the form is not limited thereto, and the form is a solid (for example, a powder, a gel, an aggregate, or the like) or gaseous substance.

Fig. 2 shows an exploded perspective view of the battery cell C1 shown in Fig. 1 exploded.

The battery can 1 of the battery cell C1 has a square form as described above, and has the rectangular can bottom 22, the square tubular side wall part (sometimes also referred to as the side circumferential surface) 21 rising from the four sides of the can bottom 22 in the cell height direction (+Y direction), and the opening portion 1a opened in the cell height direction at the upper end of the side wall part 21.

The side wall part 21 of the battery can 1 has a pair of wide side wall parts 21a facing each other while being spaced apart in a cell thickness direction (+Z direction), and a pair of narrow side wall parts 21b facing each other while being spaced apart in a cell width direction (+X direction).

The wound electrode body 3 is accommodated in the battery can 1 in a state of being wrapped and coated with an insulation protective film 2. The wound electrode body 3 has a substantially rectangular flat shape and has a pair of flat surfaces and a pair of curved surfaces having an arc-like cross section that face each other across the pair of flat surfaces. The wound electrode body 3 is inserted into the battery can 1 from one curved surface side and is accommodated in the battery can 1 in a sideways posture state where the winding axis direction is along the cell width direction (+X direction).

Here, the wound electrode body is exemplified as the electrode body, but the electrode body may also be configured as other stacked electrode bodies (in the claims, collectively referred to as an electrode body). In the embodiments to be described below, a stacked electrode body can be used, but the description will proceed using a wound electrode body.

A positive electrode foil connection portion 31d and a negative electrode foil connection portion 32d, which are electrode foil exposed parts of the wound electrode body 3, are at least partially bundled in the flat thickness direction to form a flat plate, and are joined to a positive electrode side connection end portion 42A of a positive electrode current collector plate (current collector terminal) 4A and a negative electrode side connection end portion 42B of a negative electrode current collector plate (current collector terminal) 4B by ultrasonic welding, respectively.

The base ends of the positive electrode current collector plate 4A and the negative electrode current collector plate 4B are connected to the positive electrode external terminal 8A and the negative electrode external terminal 8B, respectively. Gaskets 5 and insulation plates 7 are provided in the battery lid 6 and electrically insulate the positive electrode current collector plate 4A, the negative electrode current collector plate 4B, the positive electrode external terminal 8A, and the negative electrode external terminal 8B from the battery lid 6, respectively.

As the materials of the battery can 1 and the battery lid 6, aluminum, which is a metallic material, or an aluminum alloy can be used. As the material of the positive electrode current collector plate 4A and the positive electrode external terminal 8A, aluminum or an aluminum alloy is used. As the material of the negative electrode current collector plate 4B and the negative electrode external terminal 8B, pure copper or a copper alloy can be used.

The positive electrode external terminal 8A and the negative electrode external terminal 8B have welded joint portions that are joined to a busbar (not shown) or the like by welding. The welded joint portion has a rectangular block shape that protrudes upward from the battery lid 6 and is disposed such that the lower surface faces the surface of the battery lid 6 and the upper surface becomes parallel to the battery lid 6 at a predetermined height position.

A positive electrode connection portion 12A and a negative electrode connection portion 12B each have a columnar shape that protrudes from the lower surface of each of the positive electrode external terminal 8A and the negative electrode external terminal 8B, and can be inserted into a positive electrode side through hole 6A or a negative electrode side through hole 6B of the battery lid 6 from the distal end.

The positive electrode connection portion 12A and the negative electrode connection portion 12B penetrate the battery lid 6, protrude toward the inside of the battery can 1 more than a positive electrode current collector plate base portion 41A and a negative electrode current collector plate base portion 41B of the positive electrode current collector plate 4A and the negative electrode current collector plate 4B, and are tightened at the distal ends to integrally fix the positive electrode external terminal 8A, the negative electrode external terminal 8B, the positive electrode current collector plate 4A, and the negative electrode current collector plate 4B to the battery lid 6.

The gaskets 5 are interposed between the positive electrode external terminal 8A and the negative electrode external terminal 8B and the battery lid 6, and the insulation plates 7 are interposed between the positive electrode current collector plate 4A and the negative electrode current collector plate 4B and the battery lid 6.

The positive electrode current collector plate 4A and the negative electrode current collector plate 4B have the rectangular plate-like positive electrode current collector plate base portion 41A and negative electrode current collector plate base portion 41B that are disposed to face the lower surface of the battery lid 6 and the positive electrode side connection end portion 42A and the negative electrode side connection end portion 42B that are bent at the side ends of the positive electrode current collector plate base portion 41A and the negative electrode current collector plate base portion 41B, extend toward the can bottom 22 along the wide side surfaces of the battery can 1, and are connected in a state of being overlaid to face the positive electrode foil connection portion 31d and the negative electrode foil connection portion 32d of the wound electrode body 3.

At the positive electrode current collector plate base portion 41A and the negative electrode current collector plate base portion 41B, a positive electrode side opening hole 43A and a negative electrode side opening hole 43B into which the positive electrode connection portion 12A and the negative electrode connection portion 12B are inserted are formed.

The positive electrode external terminal 8A and the positive electrode current collector plate 4A configure a positive electrode side terminal configuration portion, and the negative electrode external terminal 8B and the negative electrode current collector plate 4B configure a negative electrode side terminal configuration portion. In addition, these positive electrode side terminal configuration portion and negative electrode side terminal configuration portion are integrally assembled with the battery lid 6 through the gaskets 5 and the insulation plates 7, whereby a battery lid assembly is configured. In addition, the wound electrode body 3 is assembled with the battery lid assembly, whereby a power generation element assembly is assembled.

The wound electrode body 3 is supported between the positive electrode current collector plate 4A and the negative electrode current collector plate 4B of the battery lid assembly, the winding axis direction extends parallel to the battery lid 6, the flat surfaces extend along a direction orthogonal to the lower surface of the battery lid 6, and the pair of curved surfaces of the wound electrode body 3 are disposed separately on the side of the battery lid 6 and on the side of the can bottom 22 of the battery can 1.

The insulation protective film 2 covers the wound electrode body 3 that has been assembled into the battery lid assembly from the outside of each of the positive electrode current collector plate 4A and the negative electrode current collector plate 4B and is interposed between the side wall part 21 and the wound electrode body 3 and between the can bottom 22 and the wound electrode body 3, in the battery can 1, respectively.

The insulation protective film 2 is made of an insulating synthetic resin material, insulates the battery can 1, the wound electrode body 3, the positive electrode current collector plate 4A, and the negative electrode current collector plate 4B from one another, and protects the wound electrode body 3, the positive electrode current collector plate 4A, and the negative electrode current collector plate 4B such that the wound electrode body 3, the positive electrode current collector plate 4A, and the negative electrode current collector plate 4B do not directly come into contact with the battery can 1 when impact or vibration has been applied to the battery cell C1 from the outside.

The battery can 1 has a size and shape with which, when the wound electrode body 3 is inserted into the battery can 1 through the opening portion 1a while the periphery of the wound electrode body 3 is covered with the insulation protective film 2, the pair of flat surfaces of the wound electrode body 3 and the wide side wall parts 21a of the side wall part 21 of the battery can 1 come into contact with each other with the insulation protective film 2 interposed therebetween, and the wound electrode body 3 can be inserted by being pressed with a slight pressing force. In addition, slight gaps are formed between end surfaces on both sides of the wound electrode body 3 in the winding axis direction and the narrow side wall parts 21b of the side wall part 21 of the battery can 1.

In addition, the opening portion 1a of the battery can 1 is closed with the battery lid 6, and the battery lid 6 is sealed to the battery can 1 by laser welding. After that, an electrolyte is loaded into the battery can 1, and the electrolyte is injected into the battery can 1 from the circulation mechanism 30U provided on the battery lid 6.

As described above, when the lithium ion secondary battery is repeatedly charged and discharged for a long period of time, metallic lithium is precipitated on the surface of the negative electrode, and lithium ions that can move between the negative electrode active material and the positive electrode active material tend to gradually decrease.

In addition, when the number of lithium ions as charge carriers decreases, there is a problem in that the battery capacity of the lithium ion secondary battery decreases. Therefore, there is a need for a configuration in which the electrolyte in use can be replenished or replaced with a new electrolyte in order to recover the battery capacity. In addition, in the case of recycling lithium ion secondary batteries, it is necessary to replace the electrolyte in use with a new electrolyte.

However, in the battery cell C1 of the conventional configuration, as described above, the liquid injection plug is laser-welded to the battery lid 6, and the electrolyte cannot be thus replenished or replaced. From such a background, there is a need for a lithium ion secondary battery enabling the replenishment or replacement of a new electrolyte.

Therefore, in order to cope with the above-described problem, the first embodiment proposes a configuration of a battery cell in which an electrolyte can be replenished or replaced. A circulation mechanism according to the first embodiment will be described below based on Fig. 1 to Fig. 4. Here, the circulation mechanism has a function of discharging the electrolyte from the battery container or injecting the electrolyte into the battery container.

Returning to Fig. 1, the battery lid 6 of the battery cell C1 is provided with at least one circulation mechanism (upper side) 30U. The circulation mechanism (upper side) 30U of the first embodiment is disposed on an outer surface 6S of the battery lid 6. In the wide side wall part 21a of the side wall part 21 of the battery can 1, when a lateral center line connecting the middle points of the short sides 21aS facing each other is indicated by CH, and a vertical center line connecting the middle points of the long sides 21aL facing each other is indicated by CV, the circulation mechanism (upper side) 30U is disposed closer to the positive electrode external terminal 8A on the outer surface 6S of the battery lid 6 in a region above the lateral center line CH and on the right side of the vertical center line CV in the drawing.

As described above, when the circulation mechanism (upper side) 30U is provided on the battery lid 6, since the circulation mechanism is disposed on the same battery lid 6 as related components (the positive electrode external terminal, the negative electrode external terminal, and the like), in a case where an operator performs replenishment or replacement of an electrolyte, an opening/closing cap described later can be attached/detached from the upper side, and handling is facilitated. Further, the battery lid 6 and the circulation mechanism 30U are integrated, whereby there is an advantage that parts can be managed as a battery lid assembly (ASSY). In addition, the circulation mechanism (upper side) 30U is configured to replenish or replace the electrolyte by opening and closing the flow path for fluidly connecting the inside and outside of the battery container (connecting the inside and the outside so that gas or liquid flows) with the opening/closing cap.

Next, a specific configuration of this circulation mechanism (upper side) 30U will be described. Fig. 3 shows a state where the opening/closing cap is not installed (open state), and Fig. 4A shows a state where the opening/closing cap is installed (closed state).

In Fig. 3, a shaft body 31 made of aluminum-based metal configuring the circulation mechanism (upper side) 30U is fixed to the battery lid 6 made of aluminum-based metal. The shaft body 31 is formed in a cylindrical shape, and a circular flange-like fixing portion 32 extending outward in a radial direction orthogonal to an axis P of the shaft body 31 is integrally formed. An example in which the shaft body 31, which is a member separate from the battery container, is fixed to the battery container is being described, but fixing may be, for example, a case where the shaft body 31 is integrally formed with the battery container so that the shaft body 31 is formed by shaving the battery container.

It is preferable that the shaft body 31 is fixed firmly and integrally to the battery container (the battery lid or the battery can). Specifically, it is preferable that the shaft body 31 is irreversibly fixed to the battery container. Irreversible fixation is, for example, welding, caulked joint, or equivalent joining. In contrast to a configuration of fastening (reversibly fixing) with a bolt-nut structure on the assumption that the bolt-nut structure is loosened, it is preferable to use the above-described fixing method from the viewpoint of strong fixing.

The fixing portion 32 is accommodated in a circular fixing recess 33 formed on the outer surface 6S of the battery lid 6. The thickness of the fixing portion 32 and the depth of the fixing recess 33 are determined to be approximately the same length, and outer surfaces 6S and 32S on the outside in the radial direction of both are approximately flush with each other.

Since the outer peripheral shape of the fixing recess 33 is formed slightly larger than the outer peripheral shape of the fixing portion 32, a wall surface 32W of the fixing portion 32 accommodated in the fixing recess 33 is accommodated in a wall surface 33W of the fixing recess 33 in a clearance fit form. The accommodation may be an intermediate fit or an interference fit. Annular contact surfaces formed on the outer surfaces 6S and 32S of the fixing portion 32 and the fixing recess 33 in this state are melted by laser welding to form a melted part 34. The laser welding is performed in multi-mode, reducing the occurrence of a spatter.

This makes the battery lid 6 and the shaft body 31 firmly and integrally fixed together, and the shaft body 31 thus does not fall off from the battery lid 6. In addition, since the annular contact surfaces formed on the outer surfaces 6S and 32S of the fixing portion 32 and the fixing recess 33 have formed the melted part 34 by laser welding, the electrolyte enclosed inside the battery container can be prevented from leakage from the joint portion between the fixing portion 32 and the fixing recess 33 due to an increase in pressure inside the battery container.

The battery lid 6 and the shaft body 31 can be firmly and integrally fixed to each other by a method different from laser welding. For example, the battery lid 6 and the shaft body 31 can be firmly and integrally fixed by ultrasonic welding, high-frequency welding, or the like.

The shaft body 31 includes a shaft portion 35 protruding outward from the outer surface 6S of the battery lid 6, and inside the shaft portion 35, a flow path 36 which fluidly connects an internal space Cin inside the battery and the outside by inserting the fixing portion 32 thereinto is formed. The flow path 36 is fluidly connected to an opening portion 37 formed in the battery lid 6, and the internal space Cin of the battery container is connected to the outside by the flow path 36 and the opening portion 37. This makes the discharge of the electrolyte or the injection of the electrolyte or a substance of a predetermined component into the electrolyte possible.

A diameter D0 of the fixing portion 32 has a relationship of "D0 > D1" with respect to a diameter D1 of the shaft portion 35 around the axis P of the shaft body 31, a diameter D2 of the opening portion 37 of the battery lid 6 has a relationship of "D1 > D2" with respect to the diameter D1 of the shaft portion 35, and a diameter D3 of the flow path 36 of the shaft portion 35 has a relationship of "D2 > D3" with respect to the diameter D2 of the opening portion 37 of the battery lid 6.

Accordingly, the overall diameter relationship is determined to be a relationship "D0 > D1 > D2 > D3". The diameter D3 of the flow path 36 and the diameter D2 of the opening portion 37 correspond to the circulation area where the electrolyte passes but do not necessarily need to be circular.

Since the area where the electrolyte flows increases from the flow path 36 of the shaft portion 35 toward the opening portion 37 of the battery lid 6 as described above, the electrolyte can be smoothly injected. Conversely, when the area where the electrolyte flows from the flow path 36 of the shaft portion 35 toward the opening portion 37 of the battery lid 6 decreases, the opening portion 37 becomes narrow to inhibit the flow of the electrolyte, and there is a concern that the electrolyte may overflow out of the shaft portion 35, which is not preferable.

In the first embodiment, the circulation area of the opening portion 37 of the battery lid 6 is formed to be larger than the circulation area of the flow path 36 of the shaft portion 35, but the circulation areas of the opening portion 37 of the battery lid 6 and the flow path 36 of the shaft portion 35 may be the same. This prevents the flow of the electrolyte from being inhibited and eliminates the concern of the electrolyte overflowing out of the shaft portion 35.

On the outer periphery of the shaft portion 35, a shaft portion side screw portion 38 to which the opening/closing cap 39 (refer to Fig. 4A) is screwed is formed. When the shaft portion side screw portion 38 is formed on the outer periphery of the shaft portion 35 as described above, even if a chloride component of the electrolyte is precipitated, deterioration of air-tightness can be avoided. When a threaded portion of the opening/closing cap 39 is formed on the inner wall side of the shaft portion 35 forming the flow path 36, the chloride component may be precipitated at the threaded portion of the opening/closing cap 39 to degrade the sealing performance. Therefore, in the first embodiment, the threaded portion of the opening/closing cap 39 is formed on the outer peripheral side of the shaft portion 35.

Fig. 4A shows a state where the opening/closing cap 39 is screwed to the shaft portion 35 shown in Fig. 3. The opening/closing cap 39 as an example of the sealing body is removably attached to the distal end side of the shaft portion 35 so as to be capable of opening and closing an opening portion 35S of the flow path 36. The opening/closing cap 39 can be screwed to the shaft portion 35 to close the flow path 36 and the opening/closing cap 39 can be removed from the shaft portion 35 to open the flow path 36.

After the electrolyte is replenished or replaced, the opening/closing cap 39 is screwed to close the flow path 36. The appearance shape of the opening/closing cap 39 is similar to a hexagonal nut shape as shown in Fig. 1, and one opening of the hexagonal nut is closed in the shape. Since the appearance shape of the opening/closing cap 39 is a hexagonal shape as described above, the operability of rotation of the opening/closing cap 39 is improved, and handling is facilitated.

A cap side screw portion 41 to be screwed to a shaft portion side screw portion 38 formed on the outer periphery of the shaft portion 35 is formed in an inner recess 40 of the opening/closing cap 39, which makes the opening/closing cap 39 attachable to and detachable from the shaft portion 35. A seal ring 42 is disposed between an annular flat surface part 35E on the distal end side of the shaft portion 35 and an inner bottom surface 40B of the inner recess 40 in which the screw portion 41 of the opening/closing cap 39 is formed, and the opening/closing cap 39 is fastened, whereby the seal ring 42 is compressed, and the sealing performance is further enhanced. The seal ring 42 is made of a silicone-based elastic resin.

As described above, the seal ring 42 is provided on the bottom surface of the inner recess 40 of the opening/closing cap 39, and the seal ring 42 is compressed by the distal end surface of the shaft portion 35 and the bottom surface of the opening/closing cap 39 in a state where the opening/closing cap 39 is screwed to the shaft portion 31.

In addition, the opening/closing cap 39 is removed, and the battery lid 6 is tilted downward, whereby the electrolyte in the battery container is discharged, and an electrolyte is then injected, which makes it possible to replenish or replace the electrolyte. This restores the battery capacity of the lithium ion secondary battery and makes it possible for the lithium ion secondary battery to be recycled.

In the description of Fig. 4A, the fixing portion 32 of the shaft body 31 is fixed to the outer surface 6S of the battery lid 6, but may also be fixed to the inner surface of the battery lid 6. In this case, the configuration becomes, for example, as shown in Fig. 4B.

For example, the fixing recess 33 is formed on an inner surface 6R of the battery lid 6, the fixing portion 32 of the shaft body 31 is accommodated in the fixing recess 33, and laser welding is performed. Therefore, the annular contact surfaces formed on the inner surface 6R of the fixing recess 33 and an inner surface 32R of the fixing portion 32 are melted by laser welding in a state where the fixing portion 32 of the shaft body 31 is accommodated in the fixing recess 33 to form the melted part 34. Also, in this case as well, the shaft portion 35 may be set to be long enough to protrude from the outer surface 6S of the battery lid 6 and be sealed with the opening/closing cap 39.

In addition, in Fig. 4A and Fig. 4B, the electrolyte is discharged or injected by removing the opening/closing cap 39 to open and close the opening portion 35S of the flow path 36. On the other hand, the electrolyte can also be discharged or injected without removing the opening/closing cap 39. For example, according to a configuration as shown in Fig. 4C, the electrolyte is discharged or injected through the opening/closing cap 39 and a lateral hole formed in the shaft portion 35.

In Fig. 4C, a shaft portion side lateral hole 44 is formed in a direction orthogonal to the axis of the shaft portion 35 in the shaft portion 35. The shaft portion side lateral hole 44 fluidly connects the flow path 36 of the shaft portion 35 and the outer periphery of the shaft portion 35.

Similarly, in the opening/closing cap 39, a cap side lateral hole 45 is formed in a direction orthogonal to the axis of the shaft portion 35 when the opening/closing cap 39 is attached to the shaft portion 35. The cap side lateral hole 45 fluidly connects the inner periphery and outer periphery of the opening/closing cap 39, and connects the outer periphery of the opening/closing cap 39 and the outer periphery of the shaft portion 35 when the opening/closing cap 39 is attached to the shaft portion 35.

Accordingly, when the opening/closing cap 39 is rotated so that the inner peripheral side opening surface of the cap side lateral hole 45 of the opening/closing cap 39 matches the outer peripheral side opening surface of the shaft portion side lateral hole 44 of the shaft portion 35, the flow path 36 of the shaft portion 35 and the outer periphery of the opening/closing cap 39 are fluidly connected, and the electrolyte can be injected or discharged. The opening portion 35S of the shaft portion 35 may be left opened or closed.

Here, for the fixing of the shaft body 31 and the battery lid 6 in Fig. 4A to Fig. 4C, a welding method is used as described above; however, additionally, it is also possible to integrally form the battery lid 6 and the shaft portion 35 by shaving off the thick battery lid 6 or by pressing the thick battery lid 6 with a press machine or the like, or the shaft body 31 can also be fixed to the inner surface by mechanical deformation such as caulking. Furthermore, as the welding method, methods of "fusion", "pressure welding", and "brazing" can also be used.

In short, as can be seen from these coupling methods, the fixing portion 32 is preferably fixed so as to be firmly integrated to the outer surface 6S or the inner surface 6R of the battery container so that the fixing portion 32 cannot be easily separated from the outer surface 6S or the inner surface 6R of the battery container. It is needless to say that liquid tightness is ensured between both.

In addition, an injection (liquid injection) or discharge (liquid discharge) can be performed, for example, as follows.

When the flow path 36 is fluidly blocked from the outside of the container by the opening/closing cap 39, the battery container accommodates the electrode body 3 and the electrolyte in a sealed state. In a state where the flow path 36 is opened by the opening/closing cap 39, any of the following can be performed.

(1) A predetermined substance that is not contained in the electrolyte is injected from the outside to the inside of the battery container. The predetermined substance is, for example, a capacity recovery agent, an internal resistance reducing agent, an input/output characteristic improving agent, a cyclic characteristic modifier, or a storage characteristic modifier.
(2) A predetermined substance that is contained in the electrolyte is injected from the outside to the inside of the battery container. The predetermined substance is, for example, a part of the components of the electrolyte, or an additive.
(3) All of the predetermined substances that are contained in the electrolyte are injected from the outside to the inside of the battery container. For example, the electrolyte in this case may be an electrolyte that is different in component from the electrolyte already present in the battery container.
(4) One of the electrolytes that are accommodated in the container is discharged from the inside of the battery to the outside. Alternatively, after that, the other electrolyte is further injected from the outside to the inside of the battery container. For example, the electrolyte in this case may be an electrolyte that is different in component from the electrolyte already present in the battery container.

An example of the injection is, for example, to put the substance of the predetermined component exemplified in the above-described items (1) to (4) into the electrolyte in the battery container through the circulation mechanism 30U. The injection form into the electrolyte may be to directly put the substance into the electrolyte. Alternatively, the injection form may be to install the predetermined substance in the battery container in advance and then indirectly put the electrolyte thereinto so that the electrolyte comes into contact with the predetermined substance.

Next, a modified example of the first embodiment will be described based on Fig. 5. In the above-described embodiment, the circulation mechanism (upper side) 30U is provided closer to the positive electrode external terminal 8A side on the outer surface 6S of the battery lid 6 of the battery container. On the other hand, in the modified example shown in Fig. 5, a circulation mechanism (lower side) 30B is provided on the can bottom 22 of the battery can 1. This is effective in a case where the circulation mechanism (upper side) 30U is not provided on the battery lid 6 side for some reason.

The circulation mechanism (lower side) 30B in the modified example is disposed on the outer surface of the can bottom 22 of the battery can 1, and the circulation mechanism (lower side) 30B is disposed closer to a position corresponding to the positive electrode external terminal 8A on the battery lid 6 in a region below the lateral center line CH and on the right side of the vertical center line CV in the drawing. The circulation mechanism (lower side) 30B is disposed near the position of the can bottom 22 corresponding to the position of one external terminal 8A.

Preferably, the circulation mechanism (lower side) 30B is disposed close to the narrow side wall part 21b side, whereby the liquid discharge of the electrolyte can be efficiently performed by tilting the battery container. It is needless to say that the circulation mechanism (lower side) 30B has the same configuration as the configuration of the circulation mechanism (upper side) 30U shown in Fig. 4A.

In addition, when the opening/closing cap 39 of the circulation mechanism (lower side) 30B provided on the can bottom 22 is removed, the electrolyte can be replenished or replaced by tilting the battery container to discharge the electrolyte, then, placing the can bottom 22 up to inject the electrolyte, and closing the opening/closing cap 39. This restores the battery capacity of the lithium ion secondary battery and makes it possible for the lithium ion secondary battery to be recycled.

In the first embodiment and the modified example thereof, the circulation mechanisms are provided on the upper side surface (battery lid 6) and the lower side surface (can bottom 22) of the battery container, but the circulation mechanism can also be provided on the side of the narrow side wall part 21b of the battery container.

As described above, the first embodiment includes the circulation mechanism of an electrolyte including the fixing portion 32 that is welded and fixed to the outer surface or the inner surface of the battery container, the shaft portion 35 that is integrally formed with the fixing portion 32, has the flow path 36 that is inserted through the inside of the fixing portion and is fluidly connected to the internal space of the battery container, and protrudes to the outside from the outer surface of the battery container, and the opening/closing cap 39 detachably attached to the distal end side of the shaft portion 35 so as to be capable of opening and closing the opening portion of the flow path 36. According to this, it is possible to provide a novel secondary battery enabling the replenishment or replacement of an electrolyte.

### Example 2

Next, a second embodiment of the present invention will be described. In the first embodiment (Fig. 1 to Fig. 4) and the modified example thereof (Fig. 5), an example in which one circulation mechanism is provided has been described; however, in the second embodiment, two or more circulation mechanisms are provided. That is, the circulation mechanisms are individually disposed at any two places of the battery lid 6, the can bottom 22 of the battery can 1, and the side wall part 21 of the battery can 1.

In the second embodiment, the main focus is a configuration in which the electrolyte can be rapidly discharged from the battery container. Here, the circulation mechanism has the same configuration as that of the first embodiment, but circulation mechanisms having different configurations can also be used. It is needless to say that even in this case, the electrolyte can be replenished or replaced. In the present embodiment, one circulation mechanism is used to inject an electrolyte into the battery container, and the other circulation mechanism is used to discharge the electrolyte from the battery container.

In Fig. 6, the outer surface 6S of the battery lid 6 is provided with the circulation mechanism (upper side) 30U described in the first embodiment (refer to Fig. 1), and the can bottom 22 of the battery can 1 is provided with the circulation mechanism (lower side) 30B described in the modified example (refer to Fig. 5) of the first embodiment. Therefore, the circulation mechanism (upper side) 30U and the circulation mechanism (lower side) 30B are disposed in the same right side region with respect to the vertical center line CV. The circulation mechanism (lower side) 30B is disposed near the position of the can bottom 22 corresponding to the position of one external terminal 8B.

In the case of liquid discharge in such a configuration, the opening/closing cap 39 of the circulation mechanism (upper side) 30U and the opening/closing cap 39 of the circulation mechanism (lower side) 30B are opened together, whereby the electrolyte can be rapidly discharged, and the liquid discharge efficiency can be improved. That is, although the liquid discharge of the electrolyte becomes difficult due to the pressure reduction in the battery container that is caused in the process of discharging the electrolyte, since air is supplied from the circulation mechanism (upper side) 30U by the amount of the reduced pressure, the liquid discharge work of the electrolyte can be performed smoothly.

In addition, the circulation mechanism (lower side) 30B is disposed close to the side of the narrow side wall part 21b of the can bottom 22. Therefore, the electrolyte in the battery container can be fully discharged by tilting the battery container so that the circulation mechanism (lower side) 30B is on the lower side.

In addition, since the circulation mechanisms 30U and 30B are provided not on the side of the narrow side wall part 21b but on the battery lid 6 and the can bottom 22, in the case of configuring a lithium ion battery pack, it is not necessary to change the shape of a side plate for binding stacked battery cells, and an excessive increase in cost can be suppressed. The configuration of the side plate in the case of providing the circulation mechanism 30 on the side of the narrow side wall part 21b will be described in Fig. 12.

In addition, in a case where the electrolyte is injected, the opening/closing cap 39 of the circulation mechanism (lower side) 30B closes the flow path 36, a necessary amount of the electrolyte is then injected from the circulation mechanism (upper side) 30U, and the opening/closing cap 39 is closed, whereby the electrolyte can be replenished or replaced.

Next, a modified example 1 of the second embodiment will be described based on Fig. 7A and Fig. 7B. In Fig. 7A, the outer surface 6S of the battery lid 6 is provided with the circulation mechanism (upper side) 30U described in the first embodiment (refer to Fig. 1), and the can bottom 22 of the battery can 1 is provided with the circulation mechanism (lower side) 30B on the can bottom 22 on the side of the narrow side wall part 21b opposite to that in the modified example (refer to Fig. 5) of the first embodiment. Therefore, the circulation mechanism (upper side) 30U and the circulation mechanism (lower side) 30B are disposed in different regions on the right side and the left side with respect to the vertical center line CV. The circulation mechanism (lower side) 30B is disposed near the position of the can bottom 22 corresponding to the position of one external terminal 8B.

In such a configuration as well, in the case of liquid discharge, the opening/closing cap 39 of the circulation mechanism (upper side) 30U and the opening/closing cap 39 of the circulation mechanism (lower side) 30B are opened together, whereby the electrolyte can be rapidly discharged, and the liquid discharge efficiency can be improved. Similar to the second embodiment, although the liquid discharge of the electrolyte becomes difficult due to the pressure reduction in the battery container that is caused in the process of discharging the electrolyte, since air is supplied from the circulation mechanism (upper side) 30U by the amount of the reduced pressure, the liquid discharge work of the electrolyte can be performed smoothly.

In addition, the circulation mechanism (lower side) 30B is disposed close to the side of the narrow side wall part 21b of the can bottom 22. Therefore, the electrolyte in the battery container can be fully discharged by tilting the battery container so that the circulation mechanism (lower side) 30B is on the lower side.

In the configuration shown in Fig. 7A, the circulation mechanism (upper side) 30U and the circulation mechanism (lower side) 30B are disposed in different regions on the right side and the left side with respect to the vertical center line CV.

Therefore, in the case of discharging the electrolyte, even when the liquid level Lv of the electrolyte is high as shown in Fig. 7B, an electrolyte EL does not overflow from the circulation mechanism (upper side) 30U, and smooth liquid discharge becomes possible. For example, in a case where the circulation mechanism (upper side) 30U is installed on the left side with respect to the vertical center line CV as indicated by a dashed line, the electrolyte EL may overflow from the circulation mechanism (upper side) 30U indicated by a dashed line, and there is a concern that the surrounding environment may be contaminated. According to the configuration of this modified example 1, even when the liquid level Lv of the electrolyte is high, the electrolyte EL does not overflow from the circulation mechanism (upper side) 30U.

In addition, since the circulation mechanisms 30U and 30B are provided not on the side of the narrow side wall part 21b but on the battery lid 6 and the can bottom 22, in the case of configuring a lithium ion battery pack, it is not necessary to change the shape of a side plate for binding stacked battery cells, and an excessive increase in cost can be suppressed.

In addition, in the case of injecting the electrolyte, the opening/closing cap 39 of the circulation mechanism (lower side) 30B closes the flow path 36, a necessary amount of the electrolyte is then injected from the circulation mechanism (upper side) 30U, and the opening/closing cap 39 is closed, whereby the electrolyte can be replenished or replaced.

Next, a modified example 2 of the second embodiment will be described based on Fig. 8. In Fig. 8, the outer surface 6S of the battery lid 6 is provided with the circulation mechanism (upper side) 30U described in the first embodiment (refer to Fig. 1), and the circulation mechanism (side part side) 30S is provided on the narrow side wall part 21b near the can bottom 22 of the battery can 1.

The circulation mechanism (side part side) 30S is disposed near the position of the side wall part 21b corresponding to the position of the other external terminal 8B. In this modified example as well, one circulation mechanism is used to inject an electrolyte into the battery container, and the other circulation mechanism is used to discharge the electrolyte from the battery container.

Therefore, the circulation mechanism (upper side) 30U and the circulation mechanism (side part side) 30S are disposed in different regions on the right side and the left side with respect to the vertical center line CV.

In such a configuration as well, in the case of discharging the electrolyte, the opening/closing cap 39 of the circulation mechanism (upper side) 30U and the opening/closing cap 39 of the circulation mechanism (side part side) 30S are opened together, whereby the electrolyte can be rapidly discharged, and the liquid discharge efficiency can be improved. Similar to the second embodiment, although the liquid discharge of the electrolyte becomes difficult due to the pressure reduction in the battery container that is caused in the process of discharging the electrolyte, since air is supplied from the circulation mechanism (upper side) 30U by the amount of the reduced pressure, the liquid discharge work of the electrolyte can be performed smoothly.

In addition, the circulation mechanism (side part side) 30S is disposed close to the side of the can bottom 22. Therefore, the electrolyte in the battery container can be fully discharged by tilting the battery container so that the circulation mechanism (side part side) 30S is on the lower side.

In addition, in the case of injecting the electrolyte, the opening/closing cap 39 of the circulation mechanism (lower side) 30B closes the flow path 36, a necessary amount of the electrolyte is then injected from the circulation mechanism (upper side) 30U, and the opening/closing cap 39 is closed, whereby the electrolyte can be replenished or replaced.

The circulation mechanism (side part side) 30S may be provided not on the side of the narrow side wall part 21b on the left side as in the modified example 2 but on the narrow side wall part 21b on the opposite right side.

In addition, here, the description has been made using an example in which two circulation mechanisms are provided, but the present invention is not limited thereto. For example, it is conceivable to provide a plurality of circulation mechanisms on one side and provide one or a plurality of circulation mechanisms on the other side. The same applies to other examples.

### Example 3

Next, a third embodiment of the present invention will be described. In the second embodiment and the modified example thereof, the circulation mechanisms are disposed at two places to improve the liquid discharge efficiency. On the other hand, in the third embodiment, it is common that the circulation mechanisms are individually disposed at any two places of the battery lid 6, the can bottom 22 of the battery can 1, and the side wall 21 of the battery can 1, but the main focus is a configuration in which a large amount of an electrolyte can be held in the battery container at the time of injecting the electrolyte.

Here, the circulation mechanism has the same configuration as that of the first embodiment, but circulation mechanisms having other configurations can also be used. It is needless to say that even in this case, the electrolyte can be replenished or replaced.

In Fig. 9A, on the side of the negative electrode external terminal 8B on the outer surface 6S of the battery lid 6, the circulation mechanism (upper side) 30U described in the first embodiment (refer to Fig. 3) is provided, and on the side of the narrow side wall part 21b of the battery can 1 close to the can bottom 22, the circulation mechanism (side part side) 30S described in the modified example 2 (refer to Fig. 8) of the second embodiment is provided. Therefore, the circulation mechanism (upper side) 30U and the circulation mechanism (side part side) 30S are disposed in a region on the same left side with respect to the vertical center line CV. However, the circulation mechanism (side part side) 30S is disposed in a region on the lower side with respect to the lateral center line CH.

In such a configuration, in the case of injecting the electrolyte, the opening/closing cap 39 of the circulation mechanism (upper side) 30U and the opening/closing cap 39 of the circulation mechanism (side part side) 30S are opened together, whereby the electrolyte can be rapidly discharged, and a large amount of the electrolyte can be stored up to the liquid level of the circulation mechanism (side part side) 30S.

That is, as shown in Fig. 9B, in the process of injecting the electrolyte EL from the circulation mechanism (upper side) 30U, the opposite sides of the circulation mechanism (upper side) 30U and the circulation mechanism (side part side) 30S are placed on the lower side in the gravity direction, whereby, although the liquid injection of the electrolyte becomes difficult due to a pressure increase in the battery container that is caused in the process of injecting the electrolyte of the battery container, air is discharged from the circulation mechanism (side part side) 30S by the amount of the increased pressure, the liquid injection work of the electrolyte can be performed smoothly.

In addition, since the circulation mechanism (side part side) 30S is positioned on the upper side in a state where the battery container is tilted, a large amount of the electrolyte EL is injected and can be stored until the liquid level thereof reaches the liquid level Lv of the position of the circulation mechanism (side part side) 30S.

Furthermore, in the case of discharging the electrolyte, the electrolyte can be discharged from both or one side of the circulation mechanism (upper side) 30U and the circulation mechanism (side part side) 30S, which is also the same in the following modified examples.

Next, a modified example 1 of the third embodiment will be described based on Fig. 10A and Fig. 10B. In Fig. 10A, the side of the negative electrode external terminal 8B on the outer surface 6S of the battery lid 6 is provided with the circulation mechanism (upper side) 30U described in the first embodiment (refer to Fig. 1), and the side of the narrow side wall part 21b of the battery can 1 close to the battery lid 6 is provided with the circulation mechanism (side part side) 30S described in the modified example 2 (refer to Fig. 8) of the second embodiment. Therefore, the circulation mechanism (upper side) 30U and the circulation mechanism (side part side) 30S are disposed in the same left side region with respect to the vertical center line CV. However, the circulation mechanism (side part side) 30S is disposed in an upper region with respect to the lateral center line CH.

Even in such a configuration, in the case of injecting an electrolyte, the opening/closing cap 39 of the circulation mechanism (upper side) 30U and the opening/closing cap 39 of the circulation mechanism (side part side) 30S are opened together, whereby the electrolyte can be rapidly injected, and furthermore, a large amount of the electrolyte can be stored up to the liquid level of the circulation mechanism (side part side) 30S.

That is, as shown in Fig. 10B, although the liquid injection of the electrolyte becomes difficult due to a pressure increase in the battery container that is caused in the process of injecting the electrolyte from the circulation mechanism (upper side) 30U, air is discharged from the circulation mechanism (side part side) 30S by the amount of the increased pressure, and the liquid injection work of the electrolyte can be thus performed smoothly.

In addition, since the circulation mechanism (side part side) 30S is positioned on the upper side in a state where the battery container is tilted, a large amount of the electrolyte EL is injected and can be stored until the electrolyte reaches the liquid level Lv of the position of the circulation mechanism (upper side) 30U. In the case of this modified example 1, as can be seen from the comparison with Fig. 9B, the amount of the electrolyte stored can be further increased as compared to that in the third embodiment.

Next, a modified example 2 of the third embodiment will be described based on Fig. 11. In Fig. 11, two circulation mechanisms (upper side) 30U described in the first embodiment (refer to Fig. 3) are provided on the side of the positive electrode external terminal 8A on the outer surface 6S of the battery lid 6 and on the side of the negative electrode external terminal 8B on the outer surface 6S of the battery lid 6. That is, the two circulation mechanisms are disposed on the outer surface of the battery lid 6.

Therefore, the circulation mechanism (upper side) 30U on the side of the positive electrode external terminal 8A and the circulation mechanism (upper side) 30U on the side of the negative electrode external terminal 8B are disposed at symmetrical positions of a left side region and a right side region with respect to the vertical center line CV. Here, the two circulation mechanisms (upper side) 30U are disposed in an upper region with respect to the lateral center line CH.

In such a configuration as well, in the case of injecting an electrolyte, the opening/closing cap 39 of the circulation mechanism (upper side) 30U on the side of the positive electrode external terminal 8A and the opening/closing cap 39 of the circulation mechanism (upper side) 30U on the side of the negative electrode external terminal 8B are opened together, whereby the electrolyte can be rapidly injected, and furthermore, a large amount of the electrolyte can be stored until the electrolyte reaches the liquid level of the circulation mechanism (upper side) 30U. In addition, in the modified example 2, there is no need to tilt the battery container as in the third embodiment.

That is, although the liquid injection of the electrolyte becomes difficult due to a pressure increase in the battery container that is caused in the process of injecting the electrolyte from one circulation mechanism (upper side) 30U, air is discharged from the other circulation mechanism (upper side) 30U by the amount of the increased pressure, the liquid injection work of the electrolyte can be performed smoothly.

In addition, since the two circulation mechanisms (upper side) 30U are provided together on the battery lid 6, a large amount of an electrolyte can be injected and stored. In the case of this modified example 2, the amount of the electrolyte stored can be further increased as compared to those in the third embodiment and the modified example 1 thereof.

Furthermore, it is also possible to satisfy the improvement of the liquid discharge efficiency and the ensuring of the amount of the electrolyte stored by appropriately combining the second embodiment and the third embodiment. For example, when an embodiment shown in Fig. 11 and an embodiment shown in Fig. 6 or Fig. 7 are combined together, it is possible to improve the liquid discharge efficiency and ensure a large amount of the electrolyte stored. In this case, three circulation mechanisms are provided.

In addition, in the case of discharging the electrolyte, the opening/closing caps 39 of the three circulation mechanisms are opened, whereby the electrolyte can be rapidly discharged. In addition, in the case of injection, the opening/closing cap 39 of the circulation mechanism (lower side) 30B of the can bottom 22 is closed, and the electrolyte is injected from one circulation mechanism (upper side) 30U, whereby the electrolyte can be rapidly injected, and furthermore, a large amount of the electrolyte can be stored until the electrolyte reaches the liquid level of the circulation mechanism (upper side) 30U.

In the first embodiment to the third embodiment, the battery cells that are used in battery electric vehicles (BEVs) have a large battery capacity per cell, and accordingly, the cell size becomes large. In this case, although the widths of the battery lid 6, the can bottom 22, and the narrow side wall part 21b in the stacking direction become long, the circulation mechanisms 30 can also be disposed at any positions along the stacking direction to avoid interference with the wound electrode body in the battery can 1.

### Example 4

Next, a fourth embodiment of the present invention will be described. A lithium ion battery pack is configured by stacking a plurality of battery cells C1. In addition, in order to maintain this stacked state, end plates 51 are disposed at the end portions of the wide side wall parts 21a facing each other of the battery can 1. In addition, the end plates 51 are connected and fixed to each other by side plates 50. The side plates are disposed to face the narrow side wall parts 21b of the plurality of battery cells C1.

However, in an embodiment shown in Fig. 8 to Fig. 10, the circulation mechanism (side part side) 30S is provided on the narrow side wall part 21b of the battery can 1, and the side plates are obstructed by the circulation mechanism (side part side) 30S and are not attached. Therefore, it is desired to suppress mechanical interference between the side plate and the circulation mechanism (side part side) 30S. Therefore, in the fourth embodiment, a configuration is proposed in which the side plate forms a space portion for receiving the circulation mechanism (side part side) 30S.

Next, the configuration of the lithium ion battery pack of the fourth embodiment will be described using Fig. 12. Fig. 12 shows the exploded lithium ion battery pack seen from diagonally above.

In Fig. 12, eight battery cells C1 are stacked, and the stacked battery cells C1 (which become a battery cell group) are fixed by a pair of the side plates 50 and a pair of the end plates 51. In the drawing, the battery cells are surrounded from four outside corners. Both ends of the stacked battery cells C1 in the stacking direction have the pair of end plates 51, and a space between the end plates 51 is fixed by the pair of side plates 50.

The side plates 50 are disposed in parallel with the extending direction of the narrow side wall parts 21b of the stacked battery cells C1, and the end plates 51 are disposed to face the wide side wall parts 21a of the battery cells C1.

In addition, the circulation mechanism (upper side) 30U is disposed on the outer surface of the battery lid 6, and a circulation mechanism (side part side) 30S is disposed on the narrow side wall part 21b. These circulation mechanisms 30U and 30S are configured as described in the above-described embodiments. In this case, since the circulation mechanism (side part side) 30S is provided on the narrow side wall part 21b of the battery can 1, the side plate 50 is obstructed by the circulation mechanism (side part side) 30S, and it becomes difficult to insert and fix the narrow side wall part 21b.

Therefore, in the fourth embodiment, a space portion 52 is formed in the side plate 50 to receive the circulation mechanism (side part side) 30S. Here, the space portion 52 is composed of a long and narrow through hole formed in the side plate 50, and the through hole is configured to prevent the circulation mechanism (side part side) 30S from being mechanically interfered by the wall part of the side plate 50 when the side plate 50 is attached. This makes it possible to easily assemble the side plate 50.

In a case where the circulation mechanism (side part side) 30S is disposed on a narrow side wall part 21b near the can bottom 22 of the battery can 1 or near the battery lid 6, it is also possible to configure the circulation mechanism (side part side) 30S not to be mechanically interfered by the wall part of the side plate 50 by shortening the lateral length of the side plate 50 along the narrow side wall part 21b instead of using the through hole 52.

For example, in a direction in which the terminals 8A and 8B of the battery cells C1 pass through, the circulation mechanisms (side part sides) 30S of the stacked battery cells C1 are disposed so as not to overlap the wall part of the side plate 50. For example, the circulation mechanisms are disposed on the side of the can bottom 22 of the battery can 1 or the side of the battery lid 6 of the side plate 50 or are disposed between a plurality of walls of the side plates 50.

As described above, the first feature of the present invention is a lithium ion secondary battery including a battery container accommodating an electrode body and an electrolyte, wherein the battery container includes a circulation mechanism that discharges the electrolyte or injects an electrolyte or injects a substance of a predetermined component into the electrolyte, the circulation mechanism includes a fixing portion provided on the battery container, a shaft portion being continuous to the fixing portion, having a flow path that is inserted through an inside of the fixing portion and is fluidly connected to an internal space of the battery container to discharge the electrolyte or inject the electrolyte or a substance of a predetermined component into the electrolyte, and being disposed on an outer surface of the battery container, and a sealing body attached so as to be capable of blocking or opening an opening portion of the flow path on a distal end side of the shaft portion disposed in the battery container.

According to this, it is possible to provide a novel lithium ion secondary battery and a lithium ion battery pack that facilitate the discharge of an electrolyte or the injection of a substance of a predetermined component into the electrolyte.

In addition, the second feature of the present invention is a lithium ion battery pack formed by stacking a plurality of lithium ion secondary batteries each including a battery container accommodating an electrode body and an electrolyte, wherein a first circulation mechanism for injecting the electrolyte or a substance of a predetermined component into the electrolyte from an outside of the battery container toward an internal space of the battery container is disposed on a first surface of the battery container, a second circulation mechanism for discharging the electrolyte or a substance of a predetermined component injected into the electrolyte from an internal space of the battery container toward the outside of the battery container is disposed on a second surface different from the first surface of the battery container along a stacking direction of the battery container, end plates installed at both ends of the stacked lithium ion secondary batteries in the stacking direction and a side plate connecting and fixing the end plates are provided, the side plate is formed to face the second surface, and a space portion is formed in the side plate to prevent the second circulation mechanism and the side plate from mechanically interfering with each other.

According to this, it is easy to discharge the electrolyte or inject a substance of a predetermined component into the electrolyte, and when the side plate is attached, it is possible to prevent the circulation mechanism (side part side) from mechanically interfering with the wall part of the side plate.

The main features of the present invention, including different viewpoints from the following claims will be described below.

### <<Feature 1>>

A secondary battery having a structure in which an external substance can be injected thereinto or discharged even when, for example, a used battery is recycled or the like, in which a part of the structure is fixed to a container. Feature 1 is specifically the following structure.

A secondary battery comprising: a positive electrode; a negative electrode; an electrolyte;
a battery container (for example, including a battery can and a battery lid) accommodating the positive electrode, the negative electrode, and the electrolyte therein and including a through hole; and
a circulation mechanism for circulating a predetermined substance (not limited to a liquid but may be a solid (powder)) between the outside and the inside of the container,
wherein the circulation mechanism includes a main body portion that is continuous to the through hole on the side of the outside of the container and has a circulation path formed therein for circulating the predetermined substance between the outside and the inside of the container, and a sealing portion that is attached to the main body portion (may be removably attached, or may be attached to be capable of opening the circulation path in a state of being not fully detached) and blocks or opens the circulation path,
the main body portion is a separate body from the container and is fixed to the container or integrally formed with the container (the main body portion may be formed from a lid by, for example, cutting the lid to make the lid and the main body integrally formed),
in a state where the circulation path is blocked by the sealing portion (which may be, for example, a state where a battery is used), the container accommodates the positive electrode, the negative electrode, and the electrolyte in a sealed state,
in a state where the circulation path is opened by the sealing portion (which may be a state in which the battery is about to be recycled after use),

(1) injecting the predetermined substance not contained in the electrolyte from the outside of the container toward the inside,
(2) injecting the predetermined substance contained in the electrolyte from the outside of the container toward the inside (which may be a case where, for example, a part of the electrolyte is supplied),
(3) injecting all of the predetermined substance contained in the electrolyte (all of the predetermined substance may be, for example, the electrolyte itself; however, the distribution may be different from that of the electrolyte contained in the battery container) from the outside of the container toward the inside (which may be, for example, the replenishment of the electrolyte), or
(4) discharging the electrolyte accommodated in the container from the inside to the outside, and injecting another electrolyte from the outside of the container to the inside (which may be the case of, for example, the replacement of the electrolyte).

According to the present feature, it is possible to provide a secondary battery that facilitates the discharge of an electrolyte or the injection of an electrolyte or a substance of a predetermined component into the electrolyte.

### <<Feature 2>>

For example, the secondary battery according to Feature 1, wherein the predetermined substance of the (1) is injected from the outside of the container into the inside and then discharged from the inside of the container to the outside.

### <<Feature 3>>

For example, the secondary battery according to Feature 1, wherein the predetermined substance of the (1) contains one or more of a capacity recovery agent, an internal resistance reducing agent, an input/output characteristic improving agent, a cyclic characteristic modifier, or a storage characteristic modifier.

### <<Feature 4>>

For example, the secondary battery according to Feature 1, wherein the predetermined substance of the (2) contains an additive.

### <<Feature 5>>

For example, the secondary battery according to Feature 1, wherein the main body portion is formed in a cylindrical shape, and is provided with a screw thread on an outer peripheral surface,
the sealing portion includes a partially hollowed hollow portion, and is provided with a screw groove that is fitted with the screw thread on an inner peripheral surface of the hollow portion, and
the main body portion and the sealing portion are screw-fastened together.

### <<Feature 6>>

For example, the secondary battery according to Feature 4, wherein the circulation mechanism includes an elastic sealing portion, and
the sealing portion is compressed by the main body portion and the sealing portion inside the hollow portion.

For example, the secondary battery according to Feature 1, wherein a partially recessed recess is formed on the outside of the container, and
the through hole is formed in the recess, and the main body portion is inserted into and fixed to the recess.

### <<Feature 7>>

For example, the secondary battery according to Feature 1, wherein in a case where the container and the main body portion are separate bodies, the container and the main body portion are welded from the outside of the container and fixed.

### <<Feature 8>>

For example, the secondary battery according to Feature 1, wherein in a case where the container and the main body portion are separate bodies, the container and the main body portion are welded from the inside of the container and fixed.

### <<Feature 9>>

For example, the secondary battery according to Feature 1, wherein the sealing portion is removably attached to the main body portion.

### <<Feature 10>>

For example, the secondary battery according to Feature 1, wherein an opening area of the through hole of the container is larger than or equal to an opening area of the circulation path of the main body portion.

### <<Feature 11>>

A secondary battery having a structure in which an external substance can be injected into an inside or discharged when a used battery is recycled or the like, and having a plurality of the same structures. Feature 11 is specifically the following structure.

A secondary battery comprising: a positive electrode; a negative electrode; an electrolyte; a container (for example, including a battery can 1 and a battery lid 6) accommodating the positive electrode, the negative electrode, and the electrolyte therein and including a through hole; and
a plurality of circulation mechanisms including circulation paths for circulating a predetermined substance (not limited to a liquid but may be a solid (a powder, an aggregate, a foil shape, or a thin plate shape)) between the outside and the inside of the container,
wherein in a state where all of the circulation paths are blocked (which may be, for example, a state where a battery is used), the container accommodates the positive electrode, the negative electrode, and the electrolyte in a sealed state, and, in a state where one or more of the circulation paths are opened (which may be a state in which the battery is about to be recycled after use),

(1) injecting the predetermined substance not contained in the electrolyte (which may be a case where, for example, a part of the electrolyte is supplied) through one or more of the circulation paths from the outside of the container toward the inside,
(2) injecting the predetermined substance contained in the electrolyte (all of the predetermined substance may be, for example, the electrolyte itself; however, the distribution may be different from that of the electrolyte contained in the battery container) through one or more of the circulation paths from the outside of the container toward the inside (which may be, for example, the replenishment of the electrolyte),
(3) injecting all of the predetermined substance contained in the electrolyte through one or more of the circulation paths [*annotation: the electrolyte itself; here, the distribution of which may be different] from the outside of the container toward the inside [*annotation: replenishment of the electrolyte], and
   in a state where two or more of the circulation paths are open (which may be a state in which the battery is about to be recycled after use),
(4) discharging one of the electrolytes accommodated in the container through one of the circulation paths from the inside to the outside, and injecting the other electrolyte through the other circulation path from the outside of the container to the inside (which may be the case of, for example, the replacement of the electrolyte).

According to the present feature, it is possible to provide a secondary battery that facilitates the discharge of an electrolyte or the injection of an electrolyte or a substance of a predetermined component into the electrolyte.

### <<Feature 12>>

For example, the secondary battery according to Feature 11, wherein the container is formed in a rectangular shape or cubic shape,
one of the circulation mechanisms is provided on a first surface (for example, an upper surface, which may be the lid) of the container,
the other circulation mechanism is provided on a second surface (for example, a bottom surface, which may be the battery container) facing the first surface of the container, and
one of the circulation mechanisms and the other circulation mechanism are provided along (for example, may be disposed to face the upper and lower surfaces) or intersecting with a first direction connecting the first surface and the second surface (for example, may be disposed close to a diagonal line rather than the first direction along the upper and lower surfaces).

### <<Feature 13>>

For example, the secondary battery according to Feature 11, wherein the container is formed in a rectangular shape or cubic shape,
one of the circulation mechanisms is provided on a first surface of the container, and
the other circulation mechanism is provided on a third surface (which may be, for example, a side surface) intersecting with (which may be, for example, orthogonal to) and adjacent to the first surface of the container.

### <<Feature 14>>

For example, the secondary battery according to Feature 12, wherein the first surface is relatively longer than the third surface in a second direction in which the first surface is adjacent to the third surface (which may be, for example, a longitudinal direction of a cell), and
one of the circulation mechanisms is provided on the first surface on a side relatively closer to the third surface (for example, a side closer to a side surface than a middle in a longitudinal direction of a cell of a surface provided with an external terminal (for example, an upper surface)) than a center of the first surface in the second direction (the middle in the longitudinal direction of the cell of the surface provided with the external terminal).

### <<Feature 15>>

A battery pack for a secondary battery comprising: a plurality of the secondary batteries according to Feature 1 or Feature 11; and
a holding member that holds the secondary batteries, wherein the holding member includes
an insertion hole or a notch into which the circulation mechanism is inserted.

According to the present feature, it is possible to provide a battery pack for a secondary battery that facilitates the discharge of an electrolyte or the injection of a substance of a predetermined component into an electrolyte.

Here, the present invention is not limited to the above-described several examples, and includes various modified examples. The above-described examples have been described in detail in order to describe the present invention in an easy-to-understand manner, and the present invention does not necessarily include all of the configurations described. In addition, it is possible to replace a part of the configuration of an example with the configuration of another example, and the configuration of another example can also be added to the configuration of an example. It is also possible to add, delete and replace other configurations with respect to the configuration of each example.

### Reference Signs List

- C1: Lithium ion secondary battery
- 1: Battery can
- 6: Battery lid
- 8A: Positive electrode external terminal
- 8B: Negative electrode external terminal
- 22: Can bottom
- 30U: Circulation mechanism (upper side)
- 30B: Circulation mechanism (lower side)
- 30S: Circulation mechanism (side part side)
- 31: Shaft body
- 32: Fixing portion
- 33: Fixing recess
- 34: Welded portion
- 35: Shaft portion
- 36: Flow path
- 37: Opening portion
- 38: Shaft portion side screw portion
- 39: Opening/closing cap
- 40: Inner recess
- 41: Cap side screw portion
- 42: Seal ring

## Claims

1. A lithium ion secondary battery comprising:
a battery container accommodating an electrode body and an electrolyte,
wherein the battery container includes a circulation mechanism that discharges the electrolyte or injects the electrolyte or a substance of a predetermined component into the electrolyte, the circulation mechanism includes
a fixing portion provided on the battery container,
a shaft portion being continuous to the fixing portion, having a flow path that is inserted through an inside of the fixing portion and is fluidly connected to an internal space of the battery container to discharge the electrolyte or inject the electrolyte or the substance of a predetermined component into the electrolyte, and being disposed on an outer surface of the battery container, and
a sealing body attached so as to be capable of blocking or opening an opening portion of the flow path on a distal end side of the shaft portion disposed in the battery container.

2. The lithium ion secondary battery according to claim 1,
wherein the fixing portion is fixed to the battery container by welding.

3. The lithium ion secondary battery according to claim 1,
wherein a shaft portion side screw portion is formed on an outer periphery of the shaft portion,
the sealing body is an opening/closing cap having an open inner recess, a cap side screw portion that is screwed to the shaft portion side screw portion is formed in the inner recess,
the opening/closing cap is screwed to the shaft portion to close the flow path, and screwing of the opening/closing cap to the shaft portion is loosened to open the flow path.

4. The lithium ion secondary battery according to claim 3,
wherein a seal ring is provided between a bottom surface of the inner recess of the opening/closing cap and a distal end surface of the shaft portion, and
the seal ring is compressed by the distal end surface of the shaft portion and the bottom surface of the opening/closing cap in a state where the opening/closing cap is screwed to the shaft portion.

5. The lithium ion secondary battery according to claim 1,
wherein an opening portion that is fluidly connected to the internal space of the battery container is formed in the battery container to which the fixing portion is welded, and
a circulation area of the opening portion of the battery container is formed to be equal to or larger than a circulation area of the flow path formed in the fixing portion.

6. The lithium ion secondary battery according to claim 1,
wherein the circulation mechanism is provided on a battery lid, a can bottom of the battery container, or a side wall of the battery container.

7. A lithium ion secondary battery comprising:
a battery container accommodating an electrode body and an electrolyte,
wherein the battery container includes at least two circulation mechanisms that discharge the electrolyte from an internal space of the battery container toward an outside of the battery container or from the outside of the battery container toward the internal space of the battery container or inject the electrolyte or a substance of a predetermined component into the electrolyte.

8. The lithium ion secondary battery according to claim 7,
wherein the circulation mechanisms are individually disposed at any two places of a battery lid, a can bottom of the battery container, and a side wall of the battery container.

9. The lithium ion secondary battery according to claim 8,
wherein one of the circulation mechanisms is disposed on the battery lid, and
the other circulation mechanism is disposed on the can bottom of the battery container or on the side wall of the battery container.

10. The lithium ion secondary battery according to claim 9,
wherein two external terminals connected to the electrode body are provided on the battery lid,
one of the circulation mechanisms is disposed near one of the external terminals, and
the other circulation mechanism is disposed near a position of the can bottom corresponding to a position of the one external terminal, near a position of the can bottom corresponding to a position of the other external terminal, or on the side wall on a side where the other external terminal is positioned.

11. The lithium ion secondary battery according to claim 9,
wherein two external terminals connected to the electrode body are provided on the battery lid,
one circulation mechanism is disposed near one external terminal, and
the other circulation mechanism is disposed at a position near the can bottom, or at a position near the battery lid on the side wall on a side of the one external terminal.

12. The lithium ion secondary battery according to claim 7,
wherein two external terminals connected to the electrode body are provided on the battery lid of the battery container,
one circulation mechanism is disposed near one external terminal, and
the other circulation mechanism is disposed near the other external terminal.

13. The lithium ion secondary battery according to any one of claims 7 to 12,
wherein the circulation mechanism has
a fixing portion fixed to the battery container;
a shaft portion being continuous to the fixing portion, having a flow path that is inserted through an inside of the fixing portion and is fluidly connected to the internal space of the battery container to discharge the electrolyte or inject the electrolyte or a substance of a predetermined component into the electrolyte, and being disposed on an outer surface of the battery container, and
a sealing body attached so as to be capable of opening and closing an opening portion of the flow path on the distal end side of the shaft portion disposed in the battery container.

14. The lithium ion secondary battery according to claim 13,
wherein a shaft portion side screw portion is formed on an outer periphery of the shaft portion,
the sealing body is an opening/closing cap having an open inner recess, a cap side screw portion that is screwed to the shaft portion side screw portion is formed in the inner recess,
the opening/closing cap is screwed to the shaft portion to close the flow path, and the opening/closing cap is removed from the shaft portion to open the flow path.

15. A lithium ion battery pack formed by stacking a plurality of lithium ion secondary batteries each including a battery container accommodating an electrode body and an electrolyte,
wherein a first circulation mechanism for injecting the electrolyte or a substance of a predetermined component into the electrolyte from an outside of the battery container toward an internal space of the battery container is disposed on a first surface of the battery container,
a second circulation mechanism for discharging the electrolyte or the substance of the predetermined component injected into the electrolyte from the internal space of the battery container toward the outside of the battery container is disposed on a second surface different from the first surface of the battery container along a stacking direction of the battery container,
end plates installed at both ends of the stacked lithium ion secondary batteries in the stacking direction and a side plate connecting and fixing the end plates are provided, the side plate is formed to face the second surface, and a space portion is formed in the side plate to prevent the second circulation mechanism and the side plate from mechanically interfering with each other.
